# DEMANDE DE BREVET EUROPEEN

(11) **EP 2 196 917 A1**
(43) Date de publication de la demande: **16.06.2010**
(21) Numéro de dépôt: 09290887.0
(22) Date de dépôt: 27.11.2009
(51) Int. Cl.: G06F 17/21

(54) **Procédé pour imprimer un fichier électronique**

(30) Priorité: 15.12.2008 FR 0807030
(71) Demandeur: Sagem Communications SAS, 92500 Rueil-Malmaison (FR)
(72) Inventeur: Sabatier, Pierre, 95800 Cergy (FR); Berger, Jérôme, 92400 Courbevoie (FR)
(74) Mandataire: Lavialle, Bruno François Stéphane

(57) **Abrégé**

L'invention concerne un procédé pour imprimer un fichier électronique comportant du texte mémorisé dans ce fichier selon un format de texte, et dans lequel le graphisme d'au moins une partie d'une ligne de texte est modifié pour crypter des données additionnelles dans la version imprimée.

Le procédé selon l'invention comprend une opération de conversion d'au moins une partie d'une ligne de texte comportant plusieurs caractères en une image numérique de cette partie de ligne, une opération d'application d'une modification à chaque image numérique, et une opération d'établissement de données d'impression du document dans lesquelles chaque partie de ligne modifiée est représentée sous forme d'image numérique.

L'invention s'applique aux techniques permettant de crypter des données appliquées notamment l'authentification d'un document papier.

## Description

L'invention concerne un procédé d'impression d'un fichier électronique comportant des données de texte mémorisées dans un format de texte, dans lequel le document est modifié pour que sa version imprimée comporte des données additionnelles cryptées.

Les données additionnelles cryptées sont des données codées ou chiffrées dans le document imprimé de manière à pouvoir être lues uniquement par une personne avertie utilisant le cas échéant un équipement de décodage ou déchiffrage.

### ARRIERE PLAN DE L'INVENTION

Dans ce type de procédé, il est connu de jouer sur différents paramètres du texte à imprimer pour y intégrer des données additionnelles. Ceci peut être obtenu en imprimant le texte de telle façon que la position de chaque caractère soit légèrement décalée par rapport à une position nominale.

Cette solution permet d'associer à chaque caractère du texte une valeur numérique ou binaire dépendant l'écart entre la position effective du caractère et sa position nominale, selon une règle préétablie. Les décalages ont une amplitude suffisamment faible pour ne pas gêner la lecture du document par une personne, voire pour ne pas être perceptible par cette personne.

L'utilisateur qui souhaite crypter des données dans un document qu'il imprime, utilise un logiciel spécifique dans lequel il saisit les données à crypter qui sont par exemple son prénom et son nom ou autre. Ce logiciel imprime alors le document en décalant les caractères après avoir déterminé chaque décalage à partir de la règle préétablie appliquée aux données saisies par l'utilisateur.

Le décryptage des données peut être assuré avec un logiciel dédié, du type reconnaissance optique de caractères, ce logiciel étant conçu pour identifier le décalage de chaque caractère par rapport à une position nominale, et pour reconstituer les données saisies par l'utilisateur ayant généré le document imprimé.

D'une manière générale, les solutions existantes dans le domaine du cryptage de données dans l'impression d'un document sont relativement restreintes et connues. Ce nombre relativement restreint de solutions facilite leur piratage, de sorte que leur robustesse est finalement limitée.

### OBJET DE L'INVENTION

Le but de l'invention est de proposer une solution pour remédier à ces inconvénients.

### RESUME DE L'INVENTION

A cet effet, l'invention a pour objet un procédé pour imprimer un fichier électronique comportant du texte mémorisé dans ce fichier selon un format de texte, dans lequel le graphisme d'au moins une partie d'une ligne de texte est modifié pour crypter des données additionnelles dans la version imprimée, **caractérisée en ce qu**'il comprend une opération de conversion d'au moins une partie d'une ligne de texte comportant plusieurs caractères en une image numérique de cette partie de ligne, une opération d'application d'une modification à chaque image numérique pour crypter des données, et une opération d'établissement de données d'impression du document dans lesquelles chaque partie de ligne modifiée est représentée sous forme d'image numérique.

Avec cette solution, le champ des modifications applicables, et donc des possibilités pour crypter des données, est largement étendu grâce au fait que les modifications ou distorsions sont appliquées à des images numériques représentatives de parties du texte, au lieu d'être appliquées à des caractères de ce texte pris isolément.

L'invention concerne également un procédé tel que défini ci-dessus, dans lequel au moins une ligne de texte du fichier électronique est convertie en plusieurs images numériques représentant chacune une partie de cette ligne de texte.

Avec cette solution, des modifications ou distorsions géométriques différentes peuvent être appliquées à chaque partie de la ligne de texte traitée, ce qui enrichit encore significativement les possibilités disponibles pour crypter des données.

L'invention concerne également un procédé tel que défini ci-dessus, dans lequel l'opération de modification comporte l'ajout d'un motif additionnel et/ou l'application d'une transformation ou d'une distorsion géométrique chaque image numérique.

L'invention concerne également un procédé tel que défini ci-dessus, dans lequel l'opération de modification comporte l'ajout d'une ligne ondulée barrant les caractères de l'image numérique.

L'invention concerne également un procédé tel que défini ci-dessus, dans lequel l'opération de modification comporte le grossissement et/ou la réduction de chaque image numérique selon un axe horizontal.

### BREVE DESCRIPTION DES FIGURES

La figure 1 est un premier exemple de mise en oeuvre de l'invention ;
La figure 2 est un second exemple de mise en oeuvre de l'invention ;
La figure 3 est un troisième exemple de mise en oeuvre de l'invention ;
La figure 4 est un quatrième exemple de mise en oeuvre de l'invention ;
La figure 5 représente les données extraites du texte de la figure 4.

### DESCRIPTION DETAILLEE DE L'INVENTION

L'idée à la base de l'invention est de convertir chaque ligne du texte en plusieurs images numériques ou blocs de manière à pouvoir appliquer toute sorte de modification et/ou de transformation géométrique à chaque image, et d'imprimer le document sur la base des images modifiées ou transformées.

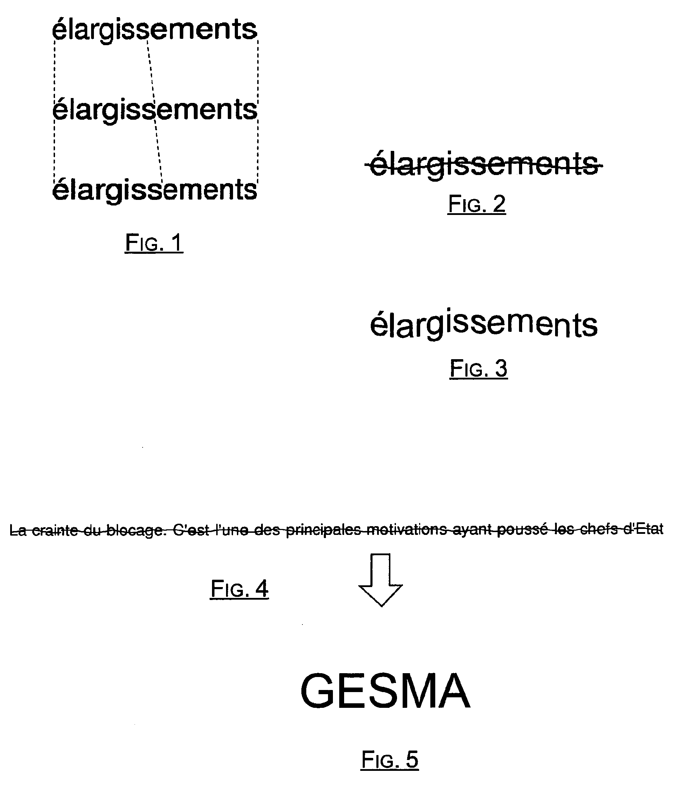

Dans la figure 1, on a représenté un exemple de mise en oeuvre de l'invention, où le mot "élargissements" d'un fichier texte est traité, ce mot apparaissant à mi-hauteur de la figure 1 dans sa forme nominale, c'est-à-dire comme lorsqu'il est imprimé normalement, selon une première forme modifiée en partie supérieure de la figure 1 et selon une seconde forme modifiée en partie inférieure de la figure 1.

Dans la première forme modifiée une première partie, qui correspond ici à la chaîne de caractères "élargiss" a été réduite, et une seconde partie, qui correspond ici à la chaîne de caractères "ements" a elle été grossie. La réduction et le grossissement sont appliqués horizontalement, c'est-à-dire sans modification de hauteur. La réduction et le grossissement ont des amplitudes complémentaires, pour conserver à la portion traitée sa longueur nominale, c'est-à-dire la longueur qu'elle aurait si elle était imprimée selon un procédé d'impression conventionnel.

Dans la première forme modifiée la première partie est grossie horizontalement alors que la seconde partie est réduite horizontalement.

Concrètement, le mot élargissements est d'abord converti en une première image numérique qui correspond ici à la suite de caractères "élargiss" et en une seconde image numérique qui correspond ici à la suite de caractères "ement", ces images correspondant ainsi chacune à une partie d'une ligne de caractères du document électronique.

Cette conversion est par exemple produite en générant à partir des définitions vectorielles des caractères utilisés, dans leur taille nominale, une image numérique qui est ensuite scindée en deux images numériques correspondant à une première et à une seconde partie complémentaires de l'image de base.

On entend par image numérique, une représentation rastérisée, c'est-à-dire sous une forme correspondant aux formats bitmap, gif, jpeg, pict et autre. Par opposition, le document à imprimer est au contraire initialement enregistré dans un format texte, dans lequel chaque caractère est défini conformément aux formats Unicode, ASCII ou autre.

L'une de ces images est ensuite grossie et l'autre réduite, horizontalement, selon des gains ajustés pour conserver à l'ensemble sa longueur nominale. L'impression sur papier du document est réalisée en établissant des données d'impression dans lesquelles le mot "élargissements" est représenté sous forme d'image numérique, telle que modifiée, et en adressant ces données à l'imprimante.

Dans l'exemple de la figure 1, l'image de base correspond à un mot entier, et les deux images résultant de sa scission comportent chacune un nombre entier de caractères, pour faciliter la compréhension du procédé.

Mais l'image de base ne correspond pas nécessairement à un mot entier, et sa scission peut tomber au niveau d'un caractère pour produire deux images comportant chacune un nombre non entier de caractères. Une partie d'un même caractère est alors située dans la première des deux images et son autre partie dans la seconde de ces deux images.

On peut par exemple convenir que la première forme modifiée correspond à la valeur binaire "un" dans la mesure où elle comporte une partie réduite suivie d'une partie grossie, et que la seconde forme modifiée correspond à la valeur binaire "zéro" dans la mesure où elle comporte une partie réduite suivie d'une partie grossie. Complémentairement on peut convenir que les parties qui ne sont ni grossies ni réduites ne comportent pas de données cryptées.

Le décryptage d'un document imprimé conformément à l'exemple de la figure 1 peut être assuré avec un logiciel de reconnaissance optique de caractères (OCR) dédié, c'est-à-dire conçu pour identifier les variations de longueur des caractères qu'il identifie, et pour reconstituer les données cryptées à partir des règles de conversion.

Comme représenté en figure 1, l'invention peut être mise en oeuvre avec des grossissements et des réduction suffisamment faibles pour être peu ou pas perceptibles par une personne lisant le document.

Dans l'exemple de la figure 2, la modification apportée à la partie de ligne de texte à traiter est l'ajout d'un trait ondulé barrant les caractères et les reliant les uns aux autres.

Les ondulations de ce trait courbe sont par elles-mêmes représentatives d'un code numérique ou binaire pouvant par exemple être identifié en appliquant à ce trait ondulé un algorithme inverse de type traitement du signal.

L'application des modifications est assurée par exemple en générant une image numérique représentative de la suite de caractères "élargissements", cette image numérique pouvant là aussi être produite à partir des définitions vectorielles des caractères utilisés.

Le trait ondulé est quant à lui établi à partir des informations saisies par l'utilisateur qui réalise l'impression, telles que ses nom prénom et autre, en définissant les ondulations avec un algorithme approprié pour représenter une suite binaire sous forme d'un trait ondulé. L'image numérique de ce trait ondulé est ensuite superposée ou fusionnée à l'image numérique pour produire l'image numérique finale qui sert de base à l'impression de la partie de ligne concernée.

Dans l'exemple de la figure 2, la modification est l'ajout d'un trait ondulé barrant les caractères, et qui est parfaitement visible par le lecteur, mais qui ne l'empêche pas de lire la partie traitée.

Dans ce cas, la personne ayant en main le document ne peut extraire de ce document papier le contenu de son texte par traitement OCR conventionnel, du fait que le trait ondulé barrant les caractères constitue, pour un logiciel OCR conventionnel, un obstacle incontournable à l'identification des caractères.

Un traitement OCR spécifique peut en contre partie être prévu pour traiter un document ainsi crypté en commençant par extraire les données que cryptent les ondulations, comme expliqué plus loin. Le trait est ensuite retiré de l'image numérique avant de procéder à l'analyse des différents caractères constituant le texte en lui-même.

De manière analogue, on peut prévoir de définir dans la partie de ligne à traiter, une ondulation du même type que celle de la figure 2, mais non ou peu visible par le lecteur, comme dans l'exemple de la figure 3. Dans ce cas, l'ondulation sert de ligne de base pour appliquer une modification consistant à décaler verticalement des parties de l'image de la ligne de texte traitée. Chaque partie est alors décalée verticalement d'une hauteur définie, à l'abscisse considérée, par le décalage vertical de la ligne ondulée par rapport à une ligne horizontale rectiligne de référence.

Dans l'exemple de la figure 3, les ondulations ont une amplitude relativement élevée, mais cette amplitude peut être réduite pour la rendre à peu près imperceptible pour le lecteur. La modification est appliquée en générant une image numérique de la partie de ligne dans sa configuration nominale, et en appliquant une transformation géométrique conditionnée par les ondulations de la ligne ondulée.

La modification peut consister à décaler verticalement chaque colonne de pixels de l'image, d'une hauteur correspondant à la hauteur de la ligne ondulée à l'abscisse considérée.

Les données peuvent être décryptées avec un logiciel OCR dédié, c'est-à-dire capable par exemple d'identifier les décalages verticaux pour en déduire une définition des ondulations de la ligne de base selon laquelle ils sont disposés. Les informations cryptées par les ondulations de la ligne de base peuvent être obtenues par application d'une opération de type traitement du signal sur la base d'un algorithme inverse.

Dans l'exemple de la figure 4, la modification est l'ajout d'un trait ondulé à la totalité d'une ligne de texte traitée pour en barrer tous les caractères. Ce trait ondulé comporte ici différents tronçons ondulés distincts, mis bout à bout, et qui ont été définis avec un algorithme dédié, pour coder le mot GESMA.

La modification peut ici être assurée en créant d'abord une ou plusieurs images numériques de la ligne de texte, à partir des définitions vectorielles des caractères contenus dans cette ligne de texte. Ensuite, le trait ondulé généré par l'algorithme dédié est fusionné soit globalement à l'image numérique représentative de l'ensemble de la ligne, soit par tronçons, à chaque image numérique représentative d'une partie de ligne.

Comme dans les cas précédents, les parties modifiées du texte sont représentées sous forme d'image numérique dans les données qui sont adressées à l'imprimante pour assurer l'impression du document papier.

Le trait ondulé ajouté de façon visible à la ligne de caractères dans la figure 4 peut aussi être utilisé non pas pour être ajouté de façon visible, mais pour constituer une ligne de base conditionnant des décalages verticaux.

D'une manière générale, le trait ondulé ou la ligne de base ondulée peut être généré avec un algorithme basé sur une modulation de type BPSK, signifiant Binary Phase Shifting Keying, c'est-à-dire modulation binaire par décalage de phase. Ceci permet de crypter 13 bits par ligne de texte en incluant les données relatives à un contrôle cohérence des données cryptées, soit environ 700 bits pour une page de texte.

Le trait ondulé ou la ligne de base ondulée peut aussi être générée avec un algorithme basé sur une modulation QPSK, signifiant Quadrature Phase Shift Keying, c'est-à-dire modulation par décalage de phase en quadrature. Ceci permet d'atteindre 26 bits par ligne de texte, soit environ 1400 bits pour une page de texte, soit 180 caractères pouvant être cryptés dans chaque page de texte.

L'ondulation peut encore être générée avec une modulation du type QAM, signifiant Quadrature Amplitude Modulation, qui permet d'accroître encore la quantité de données pouvant être cryptées, au prix d'une complexité de décryptage accrue.

Le décodage des informations contenues dans une ligne de texte barrée par un trait ondulé peut être assuré avec un algorithme dédié tel que défini ci-après. Cet algorithme consiste par exemple à extraire dans un premier temps une image de la ligne de texte à décrypter. Pour chaque position le long de cette image, c'est-à-dire pour chaque colonne de points ou pixels de cette image, l'algorithme détermine une moyenne des positions verticales des points ou pixels noirs, ce qui permet d'établir une série de nombres. Un algorithme de démodulation, basé sur la modulation choisie, c'est-à-dire BPSK, QPSK ou QAM, est ensuite appliqué à cette série de nombre, ce qui permet d'extraire les données cryptées.

Complémentairement, le trait ondulé peut être reconstitué à partir des données décryptées, pour construire une image comportant uniquement le trait ondulé, ce qui permet d'extraire ce trait de l'image de la ligne de texte traitée par simple différence d'image numérique. L'image résultante peut alors être traitée par un algorithme de reconnaissance optique de caractères conventionnel.

Dans le cas où l'ondulation est utilisée pour constituer une ligne de base de la ligne de texte, l'algorithme s'applique de manière analogue pour extraire les données cryptées. Le traitement par OCR conventionnel du document peut par ailleurs être appliqué directement pour identifier les différents caractères du document.

Dans les différents exemples qui ont été décrits, les modifications sont appliquées uniquement aux images numériques. Mais il est également possible, d'appliquer des modifications aux caractères tels que définis vectoriellement, avant établissement de l'image numérique représentative de chaque partie de ligne, puis application d'une autre modification à cette image numérique.

Par exemple, des grossissements peuvent être appliqués aux caractères pris dans leurs définitions vectorielles avant établissement d'images numériques en vue d'appliquer à ces images des modifications additionnelles telles que les ondulations de la figure 3, avant l'établissement des données destinées à l'impression sur papier du document.

Le décryptage peut alors consister d'une part à identifier la ligne de base des caractères, et d'autre part à identifier les grossissements de chaque caractère pour reconstituer ensuite les données cryptées.

Selon le cas, le fichier d'impression, c'est-à-dire les données adressées à l'imprimante peuvent comporter une image représentative de l'ensemble de chaque page à imprimer et résultant de la réunion des différentes images auxquelles ont été appliquées les modifications. Ces données peuvent aussi comporter autant d'images numériques que de parties de lignes qui ont été traitées.

## Revendications

1. Procédé pour imprimer un fichier électronique comportant du texte mémorisé dans ce fichier selon un format de texte, dans lequel le graphisme d'au moins une partie d'une ligne de texte est modifié pour crypter des données additionnelles dans la version imprimée, **caractérisée en ce qu'**il comprend une opération de conversion d'au moins une partie d'une ligne de texte comportant plusieurs caractères en une image numérique de cette partie de ligne, une opération d'application d'une modification à chaque image numérique pour crypter des données, et une opération d'établissement de données d'impression du document dans lesquelles chaque partie de ligne modifiée est représentée sous forme d'image numérique.

2. Procédé selon la revendication 1, dans lequel au moins une ligne de texte du fichier électronique est convertie en plusieurs images numériques représentant chacune une partie de cette ligne de texte.

3. Procédé selon la revendication 1 ou 2, dans lequel l'opération de modification comporte l'ajout d'un motif additionnel et/ou l'application d'une transformation ou d'une distorsion géométrique à chaque image numérique.

4. Procédé selon l'une des revendications 1 à 3, dans lequel l'opération de modification comporte l'ajout d'une ligne ondulée barrant les caractères de l'image numérique.

5. Procédé selon l'une des revendications 1 à 4, dans lequel l'opération de modification comporte le grossissement et/ou la réduction de chaque image numérique selon un axe horizontal.
